# DEMANDE DE BREVET EUROPEEN

(11) **EP 1 102 457 A2**
(43) Date de publication de la demande: **23.05.2001**
(21) Numéro de dépôt: 00403262.9
(22) Date de dépôt: 22.11.2000
(51) Int. Cl.: H04M 1/02, H04M 1/725

(54) **Enregistreur portable universel**

(30) Priorité: 22.11.1999 FR 9914646
(71) Demandeur: SAGEM SA, 75116 Paris (FR)
(72) Inventeur: Rieul, François, 78100 Saint Germain en Laye (FR); Porato, Marc, 60240 Loconville (FR)
(74) Mandataire: Bloch, Gérard

(57) **Abrégé**

L'enregistreur universel constitue un combiné de téléphone sans fil comportant des circuits de traitement de données (11), associés à une mémoire(14) et à un afficheur (15) des données, et un module de conversion amovible (12) coopérant électriquement avec un capteur de mesure associé (2).

## Description

La présente invention concerne les enregistreurs portables qui, par exemple, permettent à un sportif de surveiller sa vitesse, la distance parcourue, l'altitude.

Un tel enregistreur peut se fixer au guidon d'une bicyclette pour afficher la vitesse fournie par un odomètre couplé à une roue, la température et diverses autres grandeurs.

Pour traiter ces diverses grandeurs, l'enregistreur comporte divers ensembles électroniques, tels qu'une unité de calcul, des mémoires et des circuits de liaison adaptés aux capteurs, en général externes, fournissant la mesure de ces grandeurs.

Ces ensembles représentent un coût et un volume non négligeables.

La demanderesse a alors songé à mieux utiliser ce coût et ce volume en intégrant dans l'enregistreur des fonctions autres que celles directement liées à l'enregistrement, et, précisément, en intégrant dans celui-ci des fonctions de téléphonie sans fil.

C'est ainsi qu'elle présente son invention.

A cet effet, l'invention concerne un enregistreur portable universel comportant des moyens de traitement de données associés à des moyens de mémorisation et à des moyens d'affichage des données, enregistreur caractérisé par le fait qu'il est un combiné de téléphone sans fil, comportant un module de conversion amovible agencé pour coopérer électriquement avec un capteur de mesure associé.

On connaissait certes, dans un autre domaine, des applications dans lesquelles un combiné GSM était associé à un appareil de traitement de données, comme par exemple un parcmètre, pour en centraliser les données. Cependant, il n'y avait là qu'une simple juxtaposition d'appareils, les moyens propres à chacun étant réservés à la fonction particulière de celui-ci, si bien que le résultat global ne présentait pas d'avantage particulier.

Par contre, ici, les divers circuits d'un enregistreur classique peuvent être mis en commun pour servir aussi à la téléphonie, c'est-à-dire que cette dernière fonction valorise, auprès des clients potentiels, l'enregistreur, au prix d'un surcoût très limité. Par ailleurs, l'enregistreur portable reste de volume limité puisque son élément de base peut recevoir n'importe quel module de conversion amovible nécessaire pour une application déterminée, les modules pour d'autres applications n'étant pas montés mais restant cependant disponibles.

De préférence, les moyens de traitement sont agencés pour commander l'émission des données par des circuits radio du combiné et en particulier pour transférer, par ceux-ci, les données dans un appareil de télétraitement et pour en recevoir les données traitées.

Ainsi, l'intégration de divers moyens d'enregistrement et de téléphonie dans un même boîtier, qui permet d'offrir la téléphonie pour un surcoût limité, est complétée par une intégration fonctionnelle au niveau de l'exploitation puisque la fonction téléphonie permet d'enrichir la fonction enregistreur. On peut par exemple réduire la taille des moyens de traitement et de mémorisation, les moyens mémoires pouvant être vidés, à travers le réseau téléphonique, dans une mémoire de grande taille et proportionnellement moins chère d'un appareil de traitement de données.

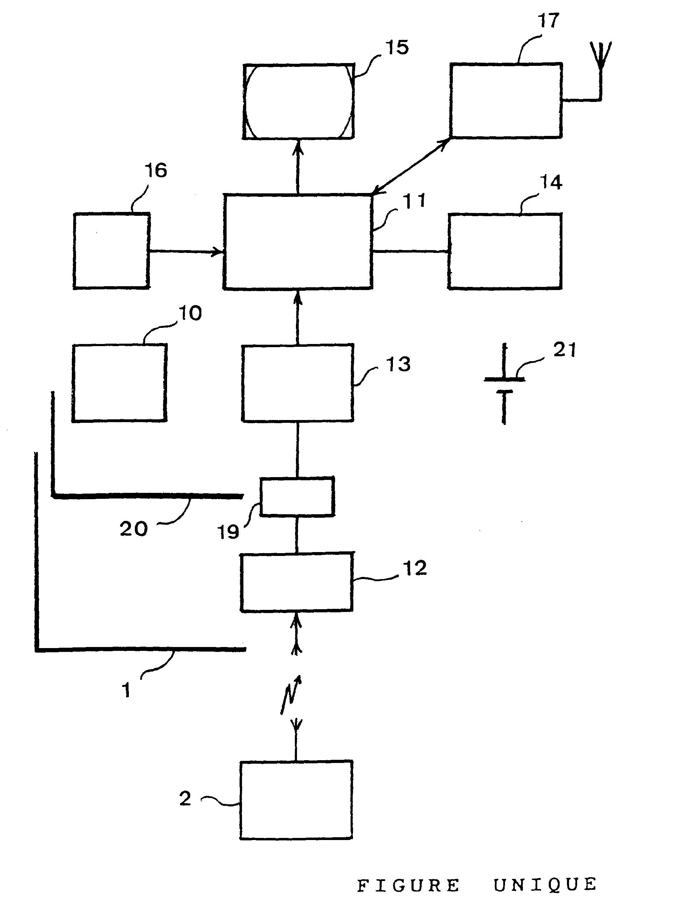

L'invention sera mieux comprise à l'aide de la description suivante d'une forme de réalisation préférée de l'enregistreur portable de l'invention, en référence à la figure unique annexée qui en représente schématiquement les circuits.

L'enregistreur portable, référencé 1 sur la figure, est relié en entrée à un capteur 2 de mesure d'une grandeur physique, capteur 2 qui est ici un odomètre couplé à la roue d'une bicyclette, non représentée, dont le guidon porte l'enregistreur 1. Dans cet exemple, la liaison du capteur 2 est une liaison radio courte portée.

L'enregistreur universel 1 est un combiné de téléphone sans fil constitué d'un boîtier 20 et d'un module amovible 12 de conversion, ou adaptation, reliés par un connecteur 19. Le module convertisseur-adaptateur 12 est prévu pour coopérer électriquement avec le capteur 2 associé, à travers ici des circuits radio courte portée, afin d'adapter par conversion les signaux ou données de mesure du capteur 2 en vue de leur traitement par un microprocesseur 11 de traitement du signal, logé dans le boîtier 20. Dans cet exemple, cette adaptation consiste à convertir les signaux du capteur 2, transmis en modulation de fréquence, en signaux à modulation d'amplitude qui sont transmis au microprocesseur 11 à travers un convertisseur analogique-numérique 13 du boîtier 20.

Dans un autre exemple, un autre module adaptateur-convertisseur 12 convertirait par exemple une mesure transmise sous forme de courant dans un fil de liaison, en signaux d'un autre type, par exemple de tension ou encore de fréquence, adapté au microprocesseur 11.

Une base de temps 10 rythme le fonctionnement des divers circuits de l'enregistreur 1 et en particulier du microprocesseur 11 de traitement des signaux du capteur 2 et de téléphonie cellulaire.

Au microprocesseur 11 est reliée une mémoire vive sauvegardée 14 pour la téléphonie cellulaire et pour le stockage des données de mesure, un afficheur 15 pour leur visualisation après traitement, des circuits radio classiques 17 de liaison avec un réseau de radiotéléphonie cellulaire, ici le réseau GSM, et un clavier 16 de téléphonie et de commande de fonctions d'enregistrement. En variante, le réseau cellulaire est le réseau GPRS, bien adapté à la transmission de données. Une batterie amovible 21 de l'enregistreur 1 en alimente l'ensemble de circuits.

La batterie 21 est ici intégrée au boîtier 20. En variante, elle porte le module convertisseur-adaptateur 12, le connecteur 19 servant alors aussi à l'alimentation des circuits du boîtier 20.

Le microprocesseur 11 traite, comme évoqué plus haut, les fonctions enregistreur et les fonctions de téléphonie cellulaire, et, en particulier, il commande l'émission, par les circuits radio 17, des données reçues du capteur 2. Cette émission, qui peut être programmée au clavier 16, permet ainsi à l'utilisateur de l'enregistreur 1 d'enregistrer ces données dans un appareil distant relié au réseau GSM, comme par exemple un PC, afin de disposer de la capacité du disque dur de celui-ci. Il est aussi prévu que l'appareil distant appelle l'enregistreur 1 pour commander le microprocesseur 11 afin qu'il transfère dans cet appareil les données reçues du capteur 2.

L'afficheur 15 est commandé par des données de gestion de la téléphonie. Il est en outre commandé, à travers le microprocesseur 11 qui les traite, par les données du capteur 2 afin de les exploiter localement en temps réel, même si ces données, ou un double de celles-ci, sont aussi transmises par radio au PC. Le microprocesseur 11 intègre dans cet exemple les mesures de vitesse du capteur odomètre 2 pour afficher la distance parcourue, ce qui peut permettre à l'utilisateur d'estimer sa position sur une carte.

Il est en outre prévu de recevoir en retour du PC ci-dessus les données émises, traitées par celui-ci. Le microprocesseur 11 peut ainsi transférer, par les circuits radio 17, les données dans un appareil de télétraitement et en recevoir les données traitées pour les afficher. La puissance de traitement du microprocesseur 11 peut ainsi être limitée tout en conservant un affichage en temps réel des mesures traitées.

## Revendications

1. Enregistreur universel comportant des moyens de traitement de données (11) associés à des moyens de mémorisation (14) et à des moyens (15) d'affichage des données, enregistreur caractérisé par le fait qu'il est un combiné de téléphone sans fil, comportant un module de conversion amovible (12) agencé pour coopérer électriquement avec un capteur de mesure associé (2).

2. Enregistreur selon la revendication 1, dans lequel les moyens de traitement (11) sont agencés pour commander l'émission des données par des circuits radio (17) du combiné.

3. Enregistreur selon l'une des revendications 1 et 2, dans lequel les moyens d'affichage (15) sont commandés par des données du capteur (2) et par des données de gestion de la téléphonie.

4. Enregistreur selon l'une des revendications 2 et 3, dans lequel les moyens de traitement (11) sont agencés pour transférer, par les circuits radio (17), les données dans un appareil de télétraitement et en recevoir les données traitées.

5. Enregistreur selon l'une des revendications 1 à 4, dans lequel le module de conversion (12) est porté par une batterie (21) de l'enregistreur.
